# EUROPEAN PATENT APPLICATION

(11) **EP 2 037 378 A1**
(43) Date of publication of application: **18.03.2009**
(21) Application number: 08163959.3
(22) Date of filing: 09.09.2008
(51) Int. Cl.: G06F 17/30

(54) **Method and apparatus for updating data of portable media player**

(30) Priority: 13.09.2007 KR 20070093257
(71) Applicant: Samsung Electronics Co., Ltd., Suwon-si, Gyeonggi-do (KR)
(72) Inventor: Ahn, Hyun-joo c/o Samsung Advanced Institute of Technology, Gyeonggi-do (KR); Kwon, Moon-sang c/o Samsung Advanced Institute of Technology, Gyeonggi-do (KR)
(74) Representative: D'Halleweyn, Nele Veerle Trees Gertrudis

(57) **Abstract**

A method of updating data of a portable media player (PMP) is provided. The portable media player (PMP) is recognized by a host device as a mobile storage device. A history file is generated in the PMP. Information on changes to the updated data is recorded when data of the PMP is updated to the history file.

## Description

### BACKGROUND OF THE INVENTION

### 1. Technical Field

The present invention relates to a portable media player (PMP), and more particularly, to a method and apparatus for updating data of a PMP.

### 2. Discussion of the Related Art

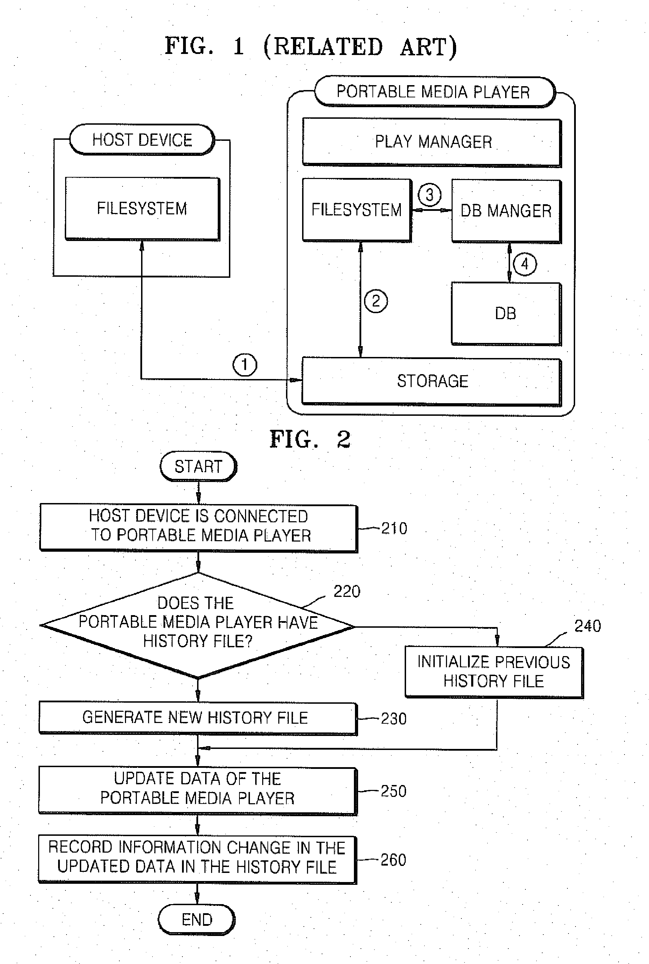

FIG. 1 is a diagram for explaining a conventional process of updating data of a portable media player (PMP) by a host device, e.g., a personal computer (PC). Referring to FIG. 1, the PMP 10 stores a media file, such as music or video, in an embedded storage area 11, and manages summary information about the stored media file, i.e., metadata, in a database 12.

The PMP 10 is connected to the host device 13. The host device recognizes the PMP as a mobile storage device. A user updates the metadata stored in the storage area via a file system 14 of the host device 13. For example, the user deletes, moves, or changes the media file stored in the storage area 11 of the PMP 10.

After the metadata is completely updated, the PMP 10 is separated from the host device and independently operates. A file system 15 of the PMP 10 searches for all the metadata stored in the storage area 11 and notifies a database manager 16 about any changes thereto. The file system 15 of the PMP 10 recognizes the changes via the file system 14 of the host device 13. Hence, both file systems 15 and 14 are based on the same standard.

Finally, the database manager 16 of the PMP 10 updates the database based on the information received from the file system 15.

Likewise, conventional PMPs need to search a whole storage area and build a metadata database of files in order to obtain information on changes made by host devices. Therefore, it takes more time to operate PMPs after they are separated from host devices. Furthermore, the storage capacity of PMPs has recently increased to several tens of gigabytes and storage capacity is likely to continue to increase rapidly.

### SUMMARY OF THE INVENTION

Exemplary embodiments of the present invention provide a method and apparatus for promptly reflecting a change in stored media files after a portable media player (PMP) is updated by and separated from a host device without having to search an entire storage area.

According to an aspect of the present invention, a method of managing data of a portable media player (PMP) is provided. The data of the PMP is recognized by a host device as a mobile storage device. The method includes generating a history file in the PMP. When data of the PMP is updated, information pertaining to changes in relation to the updated data is recorded to the history file.

The information may include file generation, file deletion, file movement, directory generation, directory deletion, and/or volume initialization.

The generating and the recording may be performed by a file system of the host device. The history file is not accessible to an application of the host device.

The generating may include initializing the history file without generating a new history file when the history file is previously included in the PMP.

According to an aspect of the present invention, a computer readable recording medium has embodied thereon, a computer program for executing a method of managing data of the PMP.

An apparatus for managing data of a PMP that is recognized by a host device as a mobile storage device, in the host device, includes a history file generating unit generating a history file in the PMP and a storage controller. When data of the PMP is updated, the storage controller records information pertaining to the updated data to the history file.

The information may include file generation, file deletion, file movement, directory generation, directory deletion, and/or volume initialization.

The history file generating unit and the storage controller may be controlled by a file system of the host device, wherein the history file is not accessible to an application of the host device.

When the history file is previously included in the PMP, the history file generating unit may initialize the history file without generating a new history file.

According to an aspect of the present invention, a method of managing data in a PMP that is recognized as a mobile storage device when connected to a host device includes analyzing a host file generated by the host device when the PMP is separated from the host device. A metadata database of data of the host device is updated based on a result of the analysis. When the metadata database is completely updated, the history file is initialized.

The history file may contain information on file generation, file deletion, file movement, directory generation, directory deletion, and/or volume initialization.

The analyzing and the initializing are performed by a file system of the PMP, and the history file is not accessible to an application installed in the PMP.

According to an aspect of the present invention, a computer readable recording medium has embodied thereon a computer program for executing the method of managing data in a PMP.

According to an aspect of the present invention, an apparatus for managing data in a PMP that is recognized as a mobile storage device when connected to a host device, includes an analyzing unit. When the PMP is separated from the host device, a host file generated by the host device is analyzed. An updating unit updates a metadata database of data of the host device based on a result of the analysis. When the metadata database is completely updated, an initializing unit initializes the history file.

The history file may contain information on file generation, file deletion, file movement, directory generation, directory deletion, and/or volume initialization.

The analyzing unit and the initializing unit may be controlled by a file system of the PMP. The history file is not accessible to an application installed in the PMP.

### BRIEF DESCRIPTION OF THE DRAWINGS

The above and other features and aspects of exemplary embodiments of the present invention will become more apparent by describing in detail exemplary embodiments thereof with reference to the attached drawings in which:
FIG. 1 is a diagram illustrating a conventional process of updating data of a portable media player (PMP) by a host device;
FIG. 2 is a flowchart illustrating a method of updating data of a PMP by a host device according to an exemplary embodiment of the present invention;
FIG. 3 illustrates a structure of a history file according to an exemplary embodiment of the present invention;
FIG. 4 is a flowchart illustrating a method of updating a metadata database in a PMP according to an exemplary embodiment of the present invention; and
FIG. 5 is a block diagram of a host device and a PMP.

### DETAILED DESCRIPTION OF THE EXEMPLARY EMBODIMENTS

Exemplary embodiments of the present invention will now be described more fully with reference to the accompanying drawings.

FIG. 2 is a flowchart illustrating a method of updating data of a portable media player (PMP) by a host device according to an exemplary embodiment of the present invention. Referring to FIG. 2, in operation 210, the host device is connected to the PMP. The host device recognizes the PMP as a mobile storage device. For example, the PMP is recognized as a new volume in a file system of the host device.

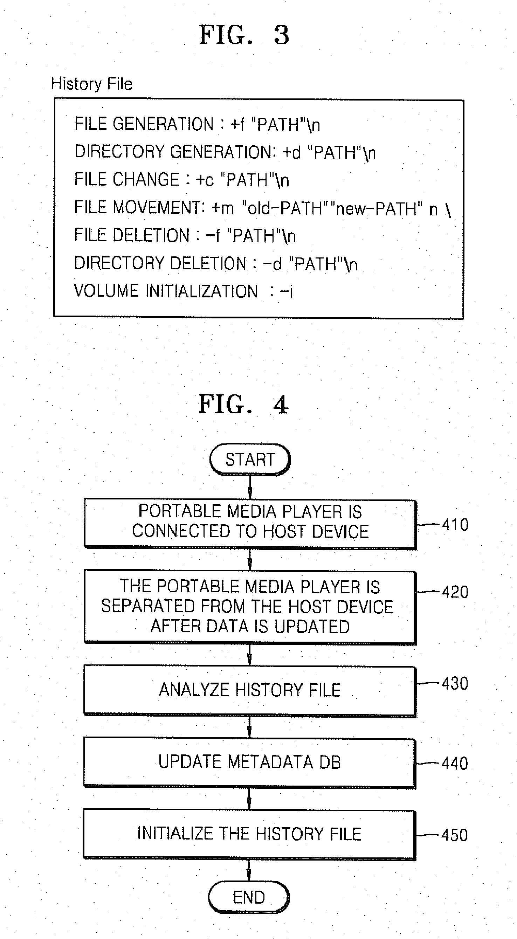

In operation 220, the host device examines whether the PMP has a history file. The history file notifies a change in data of the PMP before and after the data is updated. The history file will be described later with reference to FIG. 3.

If the host device determines that the PMP has no history file (No, operation 220), the host device generates a new history file in the PMP in operation 230. If the host device determines that the PMP has a history file (Yes, operation 220), the host device does not generate a new history file but initializes the newly determined history file in operation 240. If content recorded in the history file has not been reflected in a metadata database of the PMP, the content remains unchanged. Meanwhile, the PMP may initialize the history file.

In operation 250, the host device updates the data of the PMP according to a user's input. For example, the host device deletes or moves a file stored in the storage area of the PMP or stores a new file in the storage area. Alternatively, the host device may generate a new directory or delete a directory stored in the storage area.

In operation 260, the host device records information on changes in the data of the PMP that was updated in operation 250 in the history file.

When the host device generates the history file in the storage area of the PMP and updates the data stored in the storage area, if the host device records the change in the history file, it does not need to search the whole storage area in order to update the metadata database when the PMP is separated from the host device. For example, the PMP analyzes the history file stored by the host device and updates the metadata database based on the content recorded in the history file, which reduces an initial driving period.

Meanwhile, the file system of the host device may generate and store the history file. An application installed in the host device or the PMP may not access the history file. If the history file is generated and stored by an application of the host device, and is accessed by another application of the host device or the PMP, the history file is not properly protected. For example, the history file can be changed or deleted while a user uses another application. Therefore, the history file may be managed by only the file system of the host device or the PMP.

FIG. 3 illustrates a structure of a history file according to an exemplary embodiment of the present invention. Referring to FIG. 3, the history file includes information, such as file generation, directory generation, file changes, file movement, and the like, pertaining to how data stored in a storage area of a PMP is changed by a host device.

Therefore, the PMP does not search the whole storage area in order to discover which file and directory are newly generated and which file is deleted. The PMP instead determines that a change has occurred in the data through an analysis of the history file.

FIG. 4 is a flowchart illustrating a method of updating a metadata database in a PMP according to an exemplary embodiment of the present invention. Referring to FIG. 4, in operation 410, the PMP is connected to a host device such as a personal computer (PC). As mentioned above, the PMP operates as a passive storage device when connected to the host device, and is recognized as a new volume in a file system of the host device.

In operation 420, the host device updates data stored in a storage area of the PMP, and the PMP is separated from the host device after the data is completely updated. Thereafter, the PMP operates independently of the host device. Alternatively, the PMP may be rebooted when separated from the host device.

In operation 430, the PMP analyzes a history file stored by the host device. For example, the PMP according to an exemplary embodiment need not search the whole storage area in order to update the metadata database when separated from the host device. Accordingly, an initial driving period may be reduced as compared to the conventional art.

As mentioned above, the file system of the host device and the PMP may manage the history file. Therefore, the file system of the PMP analyzes the history file.

In operation 440, the PMP updates the metadata database based on a result of analysis of the history file. For example, when the file system of the PMP notifies a database manager of the result of analysis of the history file, the database manager updates the metadata database based on the received information.

In operation 450, the PMP initializes the history file. As mentioned above, since the history file may be accessed by the file system, the file system initializes the history file.

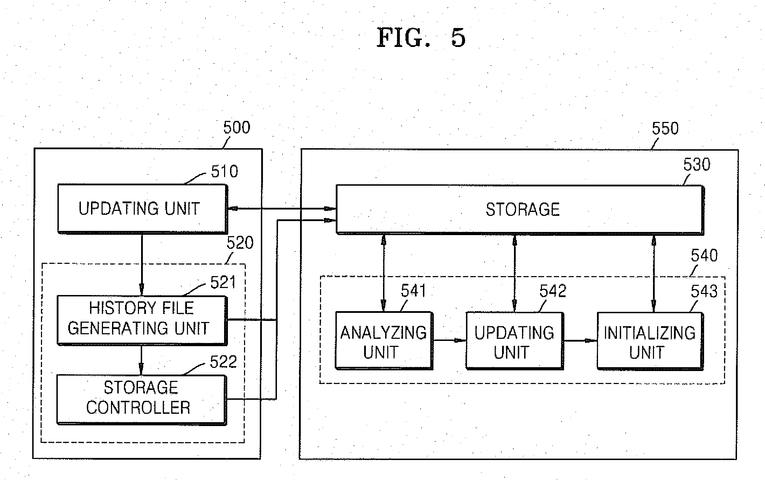

FIG. 5 is a block diagram of a host device 500 and a PMP 550. Referring to FIG. 5, the host device 500 comprises an updating unit 510 and a history file controller 520.

The updating unit 510 updates data stored in a storage unit 530 of the PMP 550. For example, the updating unit 510 generates or deletes a file or a directory, or changes a file name or a directory name.

The history file controller 520 generates a history file in the storage unit 530 of the PMP 550, and when the data of the storage unit 530 of the PMP 550 is updated, the history file controller 520 records, to the history file, an explanation regarding a change.

The history file controller 520 comprises a history file generating unit 521 and a storage controller 522.

The history file generating unit 521 determines whether the history file is included in the storage unit 530 of the PMP 550, and when no history file is included in the storage 530 of the PMP 550, the history file generating unit 521 generates a new history file. When the history file is included in the storage unit 530 of the PMP 550, the history file generating unit 521 does not generate a new history file but initializes content stored in the history file. When the content stored in the history file is not reflected in a metadata database by the PMP 550, previously changed content remains unchanged therein. As mentioned above, the PMP 550 may initialize the content stored in the history file.

When data stored in the storage unit 530 of the PMP 550 is updated by the updating unit 510, the storage controller 522 records information pertaining to the changes caused by the update to the history file.

The PMP 550 further comprises the storage unit 530 and a history file processing unit 540.

The storage unit 530 is a place where a media file, such as music and video and metadata thereof, the history file, and the like, is stored. The history file processing unit 540 described above according to exemplary embodiments of the present invention updates the metadata database based on the history file. The history file processing unit 540 comprises an analyzing unit 541, an updating unit 542, and an initializing unit 543.

The initializing unit 541 analyzes the history file stored in the storage unit 530 of the PMP 550, and notifies the updating unit 542 about a result of the analysis.

The updating unit 542 updates the metadata database according to the content of the history file.

The initializing unit 543 initializes the history file when the metadata database is completely updated. As mentioned above, the host device 500 may initialize the history file.

Exemplary embodiments of the present invention can also be embodied as computer readable code on a computer readable recording medium. The computer readable recording medium is any data storage device that can store data which can be thereafter read by a computer system.

Examples of the computer readable recording medium include read-only memory (ROM), random-access memory (RAM), CD-ROMs, magnetic tapes, floppy disks, optical data storage devices, and carrier waves (such as data transmission through the Internet).

According to the present invention, after a PMP is separated from a host device, the whole storage area need not be searched in order to rebuild a metadata database, thereby reducing an initial driving period.

While exemplary embodiments of the present invention have been particularly shown and described, it will be understood by those of ordinary skill in the art that various changes in form and detail may be made therein without departing from the spirit and scope of the present invention.

## Claims

1. A method of managing data of a portable media player (PMP) that is recognized by a host device as a mobile storage device, the method comprising:
generating a history file in the PMP (230); and
recording information pertaining to changes in the updated data to the history file (260) when the data of the PMP is updated (250).

2. The method of claim 1, wherein the information pertaining to changes in the update data comprises at least one of file generation, file deletion, file movement, directory generation, directory deletion, and volume initialization.

3. The method of claim 1, wherein the generating the history file and the recording information pertaining to changes in the update data are performed by a file system of the host device,
wherein the history file is not accessible to an application of the host device.

4. The method of claim 1, wherein the generating the history file comprises:
initializing the history file without generating a new history file when the history file is previously included in the PMP.

5. An apparatus for managing data of a PMP that is recognized by a host device as a mobile storage device, comprising:
a history file generating unit (521) adapted for generating a history file in the PMP; and
a storage controller adapted for recording information pertaining to changes in the updated data to the history filewhen data of the PMP is updated.

6. The apparatus of claim 5, wherein the information pertaining to changes in the update data comprises at least one of file generation, file deletion, file movement, directory generation, directory deletion, and volume initialization.

7. The apparatus of claim 5, wherein the history file generating unit and the storage controller are adapted to be controlled by a file system of the host device,
wherein the apparatus is adapted so that the history file is not accessible to an application of the host device.

8. The apparatus of claim 5, wherein, the history file generating unit is adapted for initializing the history file without generating a new history file, when the history file is previously included in the PMP.

9. A method of managing data in a PMP that is recognized as a mobile storage device when connected to a host device, the method comprising:
analyzing a history file generated by the host device when the PMP is separated from the host device (430);
updating a metadata database of the host device based on a result of the analysis (440); and
initializing the history file when the metadata is completely updated (450).

10. The method of claim 9, wherein the history file contains information on at least one of file generation, file deletion, file movement, directory generation, directory deletion, and volume initialization.

11. The method of claim 9, wherein the analyzing and the initializing are performed by a file system of the PMP, and
wherein the history file is not accessible to an application installed in the PMP.

12. A computer readable recording medium having embodied thereon a computer program for executing the method of any of the claims 1-4 or 9-11.

13. An apparatus for managing data in a PMP that is recognized as a mobile storage device when connected to a host device, comprising:
an analyzing unit (541) adapted for analyzing a history file generated by the host device when the PMP is separated from the host device;
an updating unit (542) adapted for updating a metadata database of the host device based on a result of the analysis; and
an initializing unit (543) adapted for initializing the history file when the metadata is completely updated.

14. The apparatus of claim 13, wherein the history file contains information on at least one of file generation, file deletion, file movement, directory generation, directory deletion, and volume initialization.

15. The apparatus of claim 13, wherein the analyzing unit and the initializing unit are adapted for being controlled by a file system of the PMP, and
wherein the apparatus is adapted so that the history file is not accessible to an application installed in the PMP.
